# EUROPEAN PATENT APPLICATION

(11) **EP 4 322 263 A1**
(43) Date of publication of application: **14.02.2024**
(21) Application number: 22940499.1
(22) Date of filing: 01.07.2022
(51) Int. Cl.: H01M 4/64, H01M 4/04

(54) **CONDUCTIVE PASTE, CURRENT COLLECTOR, SECONDARY BATTERY, BATTERY MODULE, BATTERY PACK AND ELECTRIC APPARATUS**

(71) Applicant: Contemporary Amperex Technology Co., Limited, Ningde,Fujian 352100 (CN)
(72) Inventor: PEI, Haile, Ningde, Fujian 352100 (CN); CHENG, Cong, Ningde, Fujian 352100 (CN); CHEN, Junguang, Ningde, Fujian 352100 (CN); YANG, Bingzi, Ningde, Fujian 352100 (CN); ZHANG, Shengwu, Ningde, Fujian 352100 (CN); WANG, Xinghui, Ningde, Fujian 352100 (CN)
(74) Representative: Gong, Jinping
(86) International application number: PCT/CN2022/103265
(87) International publication number: WO 2024/000560

(57) **Abstract**

This application provides a conductive slurry, a current collector, a secondary battery, a battery module, a battery pack, and an electric apparatus. The conductive slurry in this application includes the following raw material components: an aqueous binder including an aqueous polymer having polycarboxyl functionality, a conductive agent, a dispersant, and a curing agent, where the curing agent is used for cross-linking reaction with the aqueous polymer having polycarboxyl functionality. The conductive slurry in embodiments of this application has relatively good conductivity and adhesion performance as well as relatively good water resistance, which can improve stability of the secondary battery during operation and prolong its cycle life.

## Description

### TECHNICAL FIELD

This application relates to the field of lithium battery technologies, and in particular, to a conductive slurry, a current collector, a secondary battery, a battery module, a battery pack, and an electric apparatus.

### BACKGROUND

Lithium-ion batteries are widely used in electronic devices such as mobile phones, tablet computers, notebook computers, wind turbines, and solar power plants because of their advantages of high energy density, long cycle life, and little environmental pollution.

An electrode plate of the lithium-ion battery mainly includes an active material layer and a current collector. The adhesion performance between the active material layer and the current collector affects the cycle life of the electrode plate, and the conductivity between the active material layer and the current collector is related to the electrical performance and cycling performance of the battery. Therefore, the foregoing problem is neither one of the focus of research in the art.

### SUMMARY

This application has been made in view of the foregoing issues, and an objective of this application is to provide a conductive slurry that can enhance conductivity and adhesion performance between a current collector and a conductive coating and that has good water resistance for improving stability during operation of a secondary battery and prolonging its cycle life.

To achieve the above objective, this application provides a conductive slurry, a current collector, a secondary battery, a battery module, a battery pack, and an electric apparatus.

A first aspect of this application provides a conductive slurry including the following raw material components: an aqueous binder including an aqueous polymer having polycarboxyl functionality, a conductive agent, a dispersant, and a curing agent, where the curing agent is used for cross-linking reaction with the aqueous polymer having polycarboxyl functionality.

In this application, the curing agent is added to the conductive slurry to implement cross-linking reaction between the curing agent and the binder, so that part of molecule chains of the binder change from linear to a more solid three-dimensional network structure, thereby improving solvent resistance of some binder molecules, especially aqueous solvent resistance. This ensures structural integrity and high adhesion force of the coating formed by the conductive slurry on the current collector, and can maintain good conductivity, improving the stability of the secondary battery during operation and its cycle life.

In any embodiment, the conductive slurry includes, in parts by mass: 100 parts of aqueous binder, 50-150 parts of conductive agent, 800-850 parts of dispersant, and 3-16 parts of curing agent.

According to embodiments of this application, setting the amount of each raw material component can make the conductive slurry have good dispersibility and processability, and can also ensure cross-linking reaction of the aqueous polymer and the curing agent to obtain an appropriate degree of cross-linking, so as to form a stable three-dimensional cross-linked network. In this way, for the coating formed by the conductive slurry, on the one hand, the conductive agent in the coating can be bound by a three-dimensional cross-linked network of polymer molecular of the binder to maintain a stable and uniform dispersed state, so as to form a conductive network to make the coating have good conductivity; on the other hand, after the electrode is soaked in the electrolyte, the coating can still maintain good adhesion performance, thereby improving the cycling performance of the battery.

In any embodiment, the aqueous polymer having polycarboxyl functionality includes at least one of aqueous acrylic resin, an ethylene vinyl acetate copolymer, and an acrylonitrile multi-copolymer having polycarboxyl functionality.

In any embodiment, the aqueous acrylic resin includes a copolymer of polyacrylic acid, acrylic acid, acrylate and optionally other ethylenically unsaturated monomers, or a combination thereof; optionally, the aqueous acrylic resin includes polyacrylic acid having a number average molecular weight of 300,000 to 800,000; and optionally, the acrylic acid is partially neutralized to form salt.

The aqueous acrylic resin features good water solubility, which can ensure wettability of the conductive slurry in water, enhance spreading of the aqueous positive electrode material slurry on the surface of the conductive coating, and improve bonding effects between the positive electrode film layer and the conductive coating.

In any embodiment, the curing agent includes a compound having more than two carboxylic acid reactive functional groups, optionally, the carboxylic acid reactive functional group being selected from at least one of aziridine, ethylene oxide, amino, and carbodiimide group.

Optionally, the curing agent includes at least one of aziridine functional compound, polycarbodiimide and salt thereof, epoxy-functionalized silane compound, polymer grafted with epoxy silane, and polyethyleneimine; and optionally, the polycarbodiimide has a number average molecular weight of 10,000 to 40,000.

According to embodiments of this application, the carboxylic acid reactive functional groups of the curing agent undergo cross-linking reaction with a carboxyl group in the aqueous binder to form a three-dimensional cross-linked network. Specific examples of the curing agent described above reacts with the carboxyl group with high efficiency, and the resulting three-dimensional network structure is chemically stable, improving the adhesion strength between the conductive slurry and the substrate.

In any embodiment, the dispersant includes an aqueous solvent, and optionally, the aqueous solvent includes water.

In any embodiment, the raw material components of the conductive slurry further include a thickener, the thickener including at least one of xanthan gum, carboxymethyl cellulose and salt thereof, or poly-N-vinylacetamide.

In any embodiment, the conductive agent includes at least one of carbon black, graphite, acetylene black, Ketjen black, graphene, and carbon nanotubes.

A second aspect of this application further provides a method for preparing the conductive slurry in any one of the foregoing embodiments. The method includes: uniformly mixing a conductive agent, a dispersant, and an aqueous binder to obtain a pre-mixture; and adding a curing agent to the pre-mixture and uniformly mixing it to obtain a conductive slurry.

In this way, the curing agent and the aqueous binder can be fully cross-linked to generate more three-dimensional network structures, which enhances spreading effects of the conductive slurry and the adhesion strength with the substrate.

In any embodiment, a mass ratio of the curing agent to the aqueous binder is 0.03-0.16. Setting an appropriate ratio ensures sufficient water resistance of the conductive slurry and also ensures the adhesion performance of the conductive slurry.

A third aspect of this application further provides a current collector, including a substrate and a conductive coating applied on the substrate, and the conductive coating includes a conductive agent and an aqueous polymer binder having polycarboxyl functionality, where the aqueous polymer is cross-linked to form a three-dimensional network structure.

In any embodiment, the conductive coating is formed by curing the conductive slurry in any one of the foregoing embodiments.

In any embodiment, the substrate includes an aluminum foil or a polymeric material composite containing aluminum.

In any embodiment, a peeling force between the conductive coating and the substrate is N≥50N/M. The binder provided in the conductive coating enhances the adhesion strength between the conductive coating and the substrate and improves the cycle life of the secondary battery.

A fourth aspect of this application provides an electrode plate including: a current collector according to a third aspect of this application; and an active material layer provided on a conductive coating of the current collector.

In any embodiment, the active material layer includes: an olivine-structured lithium-containing phosphate and an aqueous polymer binder.

A fifth aspect of this application provides a secondary battery including the electrode plate according to the fourth aspect of this application.

A sixth aspect of this application provides a battery module including the secondary battery according to the fifth aspect of this application.

A seventh aspect of this application provides a battery pack including the battery module according to the sixth aspect of this application.

An eighth aspect of this application provides an electric apparatus including at least one of the secondary battery according to the fifth aspect of this application, the battery module according to the sixth aspect of this application, or the battery pack according to the seventh aspect of this application.

In this application, the curing agent is added to the conductive slurry to implement cross-linking reaction between the curing agent and the binder, so that part of molecule chains of the binder change from linear to a more solid three-dimensional network structure. In addition, because the carboxyl group is a hydrophilic group, when the active material is subsequently applied onto the conductive coating, infiltration, spreading, and bonding effects of the active material on the conductive coating can be better improved, ensuring low resistance and high adhesion force of the active material layer on the current collector, maintaining good conductivity, and improving stability of the secondary battery during operation and its cycle life.

### BRIEF DESCRIPTION OF DRAWINGS

FIG. 1 is a flowchart of an embodiment of a method for preparing conductive slurry according to this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.
FIG. 8 is a cross-sectional scanning electron microscope view containing an electrode plate according to an embodiment of this application.
FIG. 9 is a cross-sectional scanning electron microscope view of an electrode plate containing a conductive slurry coating in Comparative Example 1 of this application.

Reference signs are described as follows:
1. battery pack; 2. upper box body; 3. lower box body; 4. battery module; 5. secondary battery; 51. housing; 52. electrode assembly; 53. top cover assembly; 6. positive electrode material layer; 7. aluminum foil; 8. positive electrode material layer; and 9. aluminum foil.

### DESCRIPTION OF EMBODIMENTS

The following specifically discloses embodiments of a conductive slurry, a current collector, a secondary battery, a battery module, a battery pack and an electric apparatus in this application with appropriate reference to detailed descriptions of accompanying drawings. However, there may be cases where unnecessary detailed descriptions are omitted. For example, detailed descriptions of a well-known matter and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, the method includes steps (a) and (b), indicating that the method may include steps (a) and (b) in sequence, or may include steps (b) and (a) in sequence. For example, a statement that the method may further include step (c) indicates that step (c) may be added to the method in any order, for example, the method may include steps (a), (b), and (c), or may include steps (a), (c), and (b), or may include steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

A positive electrode plate of a lithium-ion battery mainly uses aluminum foil or polymer composite material containing aluminum as a substrate for a current collector. In the related art, a process procedure for preparing an electrode plate of lithium-ion battery is directly applying an active material slurry onto a surface of a substrate of the current collector to form an active material layer. When a water-soluble binder is used for manufacturing the active material slurry, the surface of the substrate of the current collector has low wettability with the active material slurry, resulting in a limited contact area between active material particles and the substrate and featuring poor adhesion. This increases resistance of the electrode plate and raises internal resistance of the battery. In particular, the electrical performance of the battery is significantly reduced under high-rate charging and discharging conditions. In addition, the water-soluble binder in the active material slurry has limited adhesion strength, and during continuous charging and discharging, it is easy for the active material layer to swell and detach from the substrate, leading to a further increase in the internal resistance of the battery, which in turn affects the cycle life and safety performance of the battery. Therefore, a conductive coating needs to be applied to the surface of the substrate to tightly attach the active material slurry to the substrate and to guarantee the adhesion force and conductivity between the active material layer and the substrate.

In the related art, the positive electrode active material slurry of the lithium battery mostly uses organic solvent, and therefore no strict requirement is imposed for water resistance of the conductive coating on the current collector. With development of battery technologies and demand for green environmental protection, the active material slurry of the positive electrode of the lithium battery is gradually transitioning towards environmentally friendly and non-polluting formulas that primarily use an aqueous solvent. When an aqueous solvent is used, the conductive coating with insufficient water resistance can be dissolved by the aqueous solvent in the positive electrode active material slurry. After dissolution of the conductive coating, the structure is damaged and loses its conductivity. More severely, it may cause the active material layer to detach from the substrate of the current collector, resulting in various abnormal performance and safety issues of the batteries.

In view of the above-mentioned issues, the present invention has developed a water-resistant conductive slurry. With the conductive slurry coating being applied onto the substrate, the current collector can be prevented from detaching from the active material layer due to dissolution of the conductive coating. This ensures normal use of the positive electrode plate and the safety and performance of the lithium batteries.

### Conductive slurry

A first aspect of this application provides a conductive slurry including the following raw material components: an aqueous binder including an aqueous polymer having polycarboxyl functionality, a conductive agent, a dispersant, and a curing agent, where the curing agent is used for cross-linking reaction with the aqueous polymer having polycarboxyl functionality.

In embodiments of this application, the aqueous binder is a binder that can be dissolved in water, and has advantages of no pollution, high flame retardancy, good conductivity, and the like, and can be used in the conductive layer. For an aqueous polymer with polycarboxyl functionality used as an aqueous binder, on the one hand, the carboxyl group can enhance water solubility of the binder; on the other hand, the carboxyl group has good reactivity and can react with other substances to change their own properties.

The curing agent is a substance that controls curing reaction and is used for improving water resistance of some binders. Specifically, some groups in the curing agent can undergo cross-linking reaction with the carboxyl group in the aqueous binder, transforming a two-dimensional carboxyl molecular chain into molecules of a more solid three-dimensional network structure. The molecules of the three-dimensional network structure can improve water resistance of the aqueous binder and also enhance stability of the structure of the aqueous binder, improving adhesion performance of the aqueous binder.

The conductive agent is a material with good conductivity, and addition of the conductive agent can enhance the conductivity of the conductive adhesive material to ensure electrical energy conduction between the active material layer and the substrate of the current collector. The dispersant can enhance dispersibility of all raw materials in the aqueous binder, ensuring performance stability of the conductive slurry.

In this application, the curing agent is added to the conductive slurry to implement cross-linking reaction between the curing agent and the binder, so that part of molecule chains of the binder change from linear to a more solid three-dimensional network structure, thereby improving solvent resistance of some binder molecules, especially aqueous solvent resistance. This ensures structural integrity and high adhesion force of the coating formed by the conductive slurry on the current collector, and can maintain good conductivity, improving the stability of the secondary battery during operation and its cycle life.

In some embodiments, the conductive slurry includes, in parts by mass: 100 parts of aqueous binder, 50-150 parts of conductive agent, 800-850 parts of dispersant, and 3-16 parts of curing agent.

In embodiments of this application, the dispersant in this application may use an aqueous solvent. Optionally, the dispersant in this application may use deionized water. The dispersant is easily accessible and has low material costs. Further, the amount of dispersant added is 800-850 parts. It can be understood that when the amount of dispersant added is less than 800, viscosity of the conductive slurry is relatively high, resulting in low mixing efficiency. When the amount of dispersant is greater than 850 parts, a subsequent drying and curing time of the conductive slurry layer may be increased, which reduces preparation efficiency of the conductive coating. Therefore, the number of parts added above can improve the preparation efficiency of the conductive coating.

In embodiments of this application, the amount of conductive agent added is 50-150 parts. When the amount of conductive agent added is less than 50 parts, the conductivity is insufficient, which may affect the electrical energy conduction between the active material layer and the substrate of the current collector and reduce the electrical performance of the battery. When the amount of conductive agent added is greater than 150 parts, the mass of the electrode plate is increased, which reduces the energy density of the secondary battery. Therefore, the foregoing amount of conductive agent added can ensure the electrical performance of the secondary battery while ensuring its energy density.

In embodiments of this application, 100 parts of aqueous binder are added and 3-16 parts of curing agent are added. Addition of a sufficient amount of aqueous binder can ensure the adhesion performance of the conductive slurry, the amount of curing agent added is less than that of the aqueous binder, and the curing agent is used for cross-linking reaction with part of the aqueous binder to change part of the two-dimensional carboxyl molecular chain into molecules of a three-dimensional network structure, which improves water resistance of the aqueous binder. The remaining part of the aqueous binder does not participate in the cross-linking reaction and therefore still maintains its own adhesion performance, to ensure adhesion performance of the conductive slurry and enhance the adhesion strength between the active material layer and the substrate of the current collector.

In the technical solutions of this application, setting appropriate raw material components and setting appropriate amounts of the raw material components can make the conductive slurry have good dispersibility and processability, and can also ensure cross-linking reaction between the aqueous polymer and the curing agent to obtain an appropriate degree of cross-linking, so as to form a stable three-dimensional cross-linked network. In this way, for the coating formed by the conductive slurry, on the one hand, the conductive agent in the coating can be bound by a three-dimensional cross-linked network of polymer molecular of the binder to maintain a stable and uniform dispersed state, forming a conductive network to make the coating have good conductivity; on the other hand, after the electrode is soaked in the electrolyte, the coating can still maintain good adhesion performance, improving the cycling performance of the battery.

In some embodiments, the aqueous polymer having polycarboxyl functionality includes at least one of aqueous acrylic resin, an ethylene vinyl acetate copolymer, and an acrylonitrile multi-copolymer having polycarboxyl functionality, optionally including polyacrylic acid, where the polyacrylic acid has a molecular weight of 300,000-800,000.

The aqueous acrylic resin, the ethylene vinyl acetate copolymer, and the acrylonitrile multi-copolymer having polycarboxyl functionality all have a plurality of active carboxyl functional groups and are able to participate in cross-linking reaction with the curing agent.

Specifically, the aqueous acrylic resin includes acrylic resin emulsion, acrylic resin aqueous dispersion (also referred to as water-dilutable acrylic acid), and acrylic resin aqueous solution, having the advantages of low costs, safety in use, environmental friendliness, and so on. The acrylic resin is a generic term for polymer of acrylic acid or methacrylic acid and its derivatives. The acrylic acid molecule or methacrylic acid molecule has one active carboxyl group, and multiple acrylic resins are polymers of acrylic acid or methacrylic acid and its derivatives and have multiple active carboxyl functional groups. Therefore, the foregoing structure can provide more active carboxyl functional groups for cross-linking reaction for curing, ensuring smooth progress of the reaction.

Ethylene vinyl acetate copolymer (EVA) has a molecular formula (C₂H₄)ₓ.(C₄H₆O₂)_{y}, and is non-irritating. Active carboxyl functional groups in ethylene vinyl acetate originate from the vinyl acetate monomer, with each vinyl acetate monomer containing one active carboxyl functional group. Therefore, the above copolymer can provide enough active carboxyl functional groups to participate in cross-linking reaction for curing. In addition, the low molecular weight of the copolymer ensures the energy density of the secondary battery.

The acrylonitrile multi-copolymer having polycarboxyl functionality has multiple active carboxyl functional groups, and can also provide sufficient active carboxyl functional groups to participate in cross-linking reaction for curing. Moreover, the acrylonitrile multi-copolymer has relatively good thermal stability, which can ensure improvement of heat-resistant performance of the conductive slurry.

Optionally, in embodiments of this application, polyacrylic acid with an average molecular weight of 300,000-800,000 is used as an aqueous binder, which is easy to prepare and features low material costs and low toxicity. Each acrylic monomer has one active carboxyl functional group; therefore, the polyacrylic acid with the foregoing molecular weight can also provide a sufficient quantity of active carboxyl groups to participate in cross-linking reaction for curing.

In embodiments of this application, the foregoing aqueous polymers having polycarboxyl functionality are all capable of cross-linking reaction with the curing agent for curing and have a stable structure and high reaction efficiency, which can effectively ensure adhesion effects of the conductive slurry.

In some embodiments, the aqueous acrylic resin includes a copolymer of acrylic acid, acrylate, and optionally other ethylenically unsaturated monomers; optionally, the acrylic acid is partially neutralized to form salt.

All of the substances have water solubility to some extent to ensure solubility of the conductive slurry in the aqueous solvent.

In some embodiments, the curing agent includes a compound having more than two carboxylic acid reactive functional groups, optionally, the carboxylic acid reactive functional group being selected from at least one of aziridine, ethylene oxide, amino, and carbodiimide group.

Optionally, the curing agent includes at least one of aziridine functional compound, polycarbodiimide and salt thereof, epoxy-functionalized silane compound, polymer grafted with epoxy silane, and polyethyleneimine; and optionally, the polycarbodiimide has a molecular weight of 10000-40000.

When the aziridine functional compound is selected as the curing agent, the carboxyl group in the aqueous binder and the aziridine group in the aziridine functional compound can have good cross-linking reaction at room temperature to produce a three-dimensional network structure, thereby improving water resistance of the conductive slurry.

When polycarbodiimide and its salt are used as the curing agent, the carbodiimide and carboxyl groups undergo cross-linking reaction to form a three-dimensional network structure. Furthermore, this structure exhibits better dispersibility in the aqueous solvent, ensuring both water resistance of the conductive slurry and improving dispersion uniformity of the binder in the conductive slurry.

When the epoxy-functionalized silane compound or grafted epoxy silane is selected as the curing agent, the epoxy group reacts with the carboxyl group to introduce a hydrolyzable silicone alkoxy group. Then, through hydrolysis and condensation of the silicone alkoxy group, Si-O-Si cross-linking is formed to obtain a three-dimensional network structure, thereby improving water resistance of the conductive slurry.

When polyethyleneimine is selected as the curing agent, the epoxy group therein reacts with the carboxyl group to produce a three-dimensional network structure, thereby improving water resistance of the conductive slurry.

The carboxylic acid reactive functional group can undergo cross-linking reaction with the carboxyl group in the aqueous binder. With the foregoing types of materials being selected, the reaction efficiency with carboxyl groups is high, and the generated three-dimensional network structure has stable chemical properties. This can enhance the adhesion strength between the conductive slurry and the substrate.

In some embodiments, the dispersant includes an aqueous solvent, optionally, the aqueous solvent includes water.

Water being used as a dispersant is low in costs and easily available, and has good dispersion effects.

In some embodiments, the raw material components of the conductive slurry further include a thickener, the thickener including at least one of xanthan gum, carboxymethyl cellulose and salt thereof, or poly-N-vinylacetamide.

With the foregoing types of thickeners being selected, it is possible not only to adjust rheological properties of the conductive slurry to achieve thickening effects, but also to disperse the conductive agent through steric hindrance effect to implement part of the functions of the dispersant.

In some embodiments, in raw material components of the conductive slurry, based on 100 parts by mass of aqueous binder, content of the thickener is 1-10 parts.

Addition of an appropriate amount of thickener ensures the thickening effects while controlling the mass of the thickener, effectively ensuring the energy density of the secondary battery.

In some embodiments, the conductive agent includes at least one of carbon black, graphite, acetylene black, Ketjen black, graphene, and carbon nanotubes. The conductive agent is used for improving conductivity of the positive electrode active material layer. This application does not specifically impose limitation on the type of conductive agent, which may be selected as needed.

### Preparation method for conductive slurry

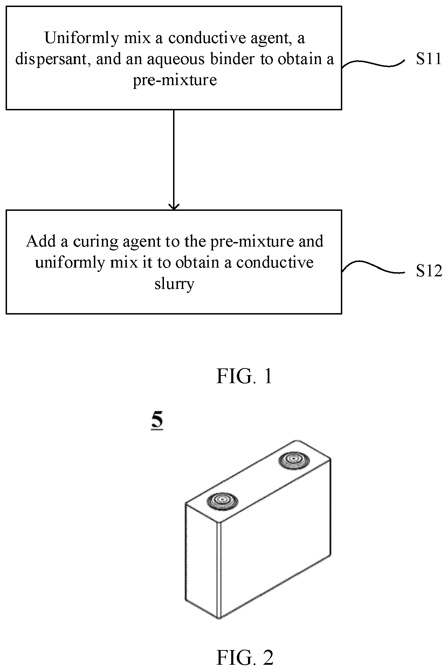

According to a second aspect of this application, a method for preparing conductive slurry is provided and is used for preparing the conductive slurry according to the first aspect. FIG. 1 is a flowchart of an embodiment of a method for preparing conductive slurry according to this application. An embodiment of the method for preparing conductive slurry shown in FIG. 1 will be described below.

As shown in FIG. 1, the method for preparing conductive slurry includes the following steps.

S11. Uniformly mix a conductive agent, a dispersant, and an aqueous binder to obtain a pre-mixture.

S12. Add a curing agent to the pre-mixture and uniformly mix it to obtain a conductive slurry.

According to embodiments of the method for preparing conductive slurry in this application, the conductive agent, the dispersant, and the aqueous binder are first mixed to obtain a mixture, and then the curing agent is added to the mixture. The curing agent being added can undergo cross-linking reaction with the aqueous binder to improve water resistance of the conductive slurry. The foregoing method for preparing conductive slurry is simple and features high manufacturability.

In some embodiments, a mass ratio of the curing agent to the aqueous binder is 0.03-0.16.

In embodiments of this application, setting the foregoing mass ratio of the curing agent to the aqueous binder can ensure smooth cross-linking reaction between the curing agent and the aqueous binder and improve water resistance of the conductive slurry, and can also ensure adhesion performance of the aqueous binder itself and improve connection strength between the conductive coating and the substrate of the current collector, ensuring the cycling performance of the secondary battery.

### Current collector

A third aspect of this application provides a current collector including a substrate and a conductive coating applied on the substrate. The conductive coating includes a conductive agent and an aqueous polymer binder having polycarboxyl functionality, where the aqueous polymer is cross-linked to form a three-dimensional network structure.

In some embodiments of this application, the substrate has two opposite surfaces in its thickness direction, and the conductive coating is provided on either or both of the two opposite surfaces of the substrate.

In some embodiments of this application, the substrate may be made of a metal foil or a composite material sheet. For example, an aluminum foil may be used as the metal foil. The composite material sheet may include a polymeric material and a metal layer formed on at least one surface of the polymer material. The composite material sheet may be obtained by forming a metallic material (such as aluminum, aluminum alloy, nickel, nickel alloy, titanium, titanium alloy, silver, and silver alloy) on a polymeric material substrate (for example, a substrate of polypropylene (PP), polyethylene terephthalate (PET), polybutylene terephthalate (PBT), polystyrene (PS), polyethylene (PE), or the like.)

In some embodiments of this application, the foregoing current collector may be used in the positive electrode plate as well as in the negative electrode plate. For the substrate being used in the positive electrode plate, an appropriate substrate for positive electrode plate may be selected, for example, an aluminum foil or a composite material sheet containing aluminum. For the substrate being used in the negative electrode plate, an appropriate substrate for negative electrode plate may be selected, for example, a copper foil.

The conductive coating is formed by applying the conductive slurry in any one of the foregoing embodiments on any one or both surfaces of the substrate and then performing cold pressing and drying.

For the current collector in embodiments of this application, the curing agent is added to the raw material of the conductive slurry, and the curing agent undergoes cross-linking reaction with the aqueous binder, so that part of molecule chains of the binder change from linear to a more solid three-dimensional network structure, thereby ensuring low resistance and high adhesion force of the conductive coating on the current collector In addition, as a hydrophilic group, the carboxyl group in the curing agent can better ensure infiltration, spreading, and bonding effects of the aqueous active material layer on the conductive slurry, and improve stability of the secondary battery during operation and its cycle life.

In some embodiments, the conductive coating is formed by curing the conductive slurry described in any one of the foregoing embodiments.

In embodiments of this application, the conductive slurry described above is uniformly applied on the substrate, followed by drying and cold pressing, to obtain the current collector in the embodiments of this application. The foregoing current collector is a current collector coated with no conductive material. The conductive coating serves to improve the adhesion strength between the conductive coating and the substrate.

In some embodiments, the substrate includes an aluminum foil or a polymeric material composite containing aluminum.

In some embodiments of this application, the conductive coating is applied to the positive electrode plate. In the positive electrode plate, an aqueous solvent is used in the positive electrode active material. The conductive coating in the embodiments of this application features relatively good hydrophily, and the aqueous solvent is able to implement relatively good infiltration on the conductive coating. Further, the conductive coating in this application also has relatively high water resistance, and therefore can maintain its original structure and may not be dissolved when coming in contact with the aqueous solvent. Therefore, the foregoing conductive coating can be better applied to the aqueous positive electrode active material system.

In some embodiments, a peeling force between the conductive coating and the substrate is N≥50N/M.

In some embodiments of this application, the conductive coating has good wettability as well as adhesion performance with the substrate, so that a high peeling force is present between the conductive coating and the substrate.

### Positive electrode plate

A fourth aspect of this application further provides a positive electrode plate, including a current collector according to the third aspect and a positive electrode active material layer provided on a conductive coating of the current collector.

In some embodiments of this application, the positive electrode current collector has two opposite surfaces in its thickness direction, and the positive electrode active material layer is disposed on either or both of the two opposite surfaces of the positive electrode current collector.

In some embodiments of this application, the current collector of the positive electrode plate may be an aluminum foil or an aluminum-polymer composite material layer. The aluminum-polymer composite material layer may include a polymeric material substrate and an aluminum layer formed on at least one surface of the polymeric material substrate. The composite current collector may be formed by forming a metal material (aluminum, aluminum alloy, nickel, nickel alloy, titanium, titanium alloy, silver, silver alloy, or the like) on a polymeric material substrate (for example, substrate of polypropylene (PP), polyethylene terephthalate (PET), polybutylene terephthalate (PBT), polystyrene (PS), and polyethylene (PE)).

In some embodiments of this application, the active material layer includes: an olivine-structured lithium-containing phosphate and an aqueous polymer binder.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the components used for preparing the positive electrode plate, for example, the positive electrode active material, the conductive agent, the compounding dispersion stabilizer, the aqueous binder, and any other components, are dissolved in a solvent (for example, deionized water) to form a positive electrode slurry. The positive electrode slurry is applied onto the conductive coating of the current collector, followed by processes such as drying and cold pressing, to obtain a positive electrode plate.

In some embodiments, the prepared positive electrode plate is an aqueous positive electrode plate, where the positive electrode active material is olivine-structured lithium-containing phosphate, such as lithium iron phosphate; the binder is an aqueous polymer binder, such as a copolymer of acrylonitrile and acrylic acid; and the solvent is an aqueous solvent, such as water.

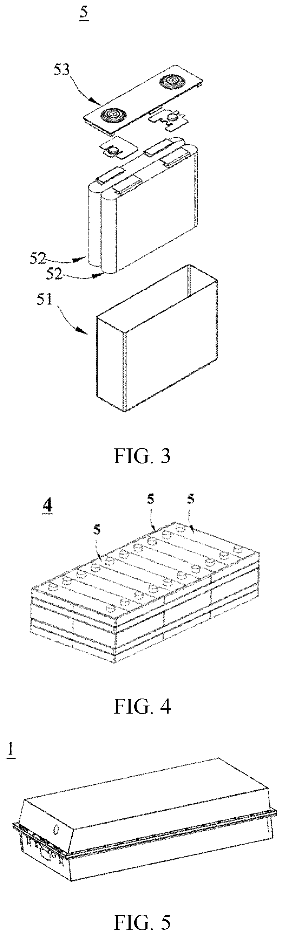

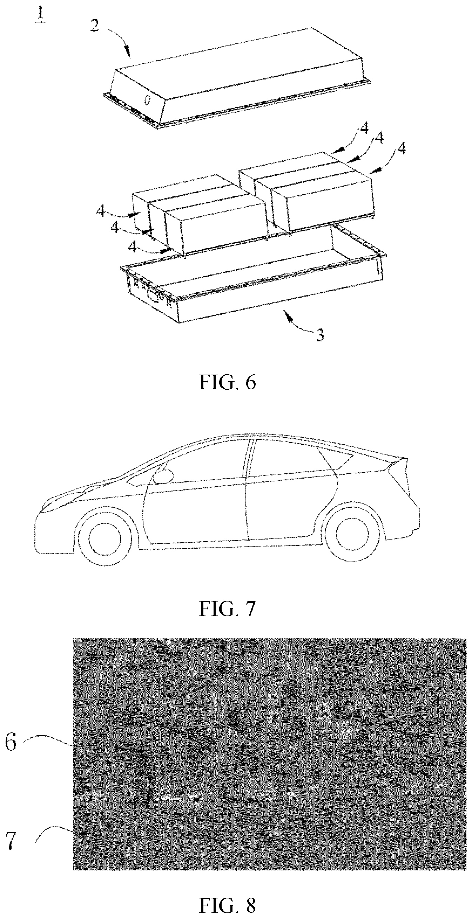

In addition, the following describes a secondary battery, a battery module, a battery pack, and an electric apparatus in this application with appropriate reference to FIG. 2 to FIG. 7. FIG. 2 is a schematic diagram of a secondary battery according to an embodiment of this application. FIG. 3 is an exploded view of the secondary battery according to the embodiment of this application in FIG. 2. FIG. 4 is a schematic diagram of a battery module according to an embodiment of this application. FIG. 5 is a schematic diagram of a battery pack according to an embodiment of this application. FIG. 6 is an exploded view of the battery pack according to the embodiment of this application in FIG. 5. FIG. 7 is a schematic diagram of an electric apparatus using a secondary battery as a power source according to an embodiment of this application.

A fifth aspect of this application provides a secondary battery. The secondary battery includes the positive electrode plate in the fourth aspect of this application.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

In some embodiments of this application, the positive electrode plate may be the positive electrode plate according to the fourth aspect of this application described above. Therefore, the foregoing descriptions of embodiments of the electrode plate according to this application are also applicable to the positive electrode plate in the secondary battery, and the same content is not repeated.

In some embodiments of this application, the negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymeric material substrate and a metal layer formed on at least one surface of the polymeric material substrate. The composite current collector may be formed by forming a metal material (copper, copper alloy, nickel, nickel alloy, titanium, titanium alloy, silver, silver alloy, or the like) on a polymeric material substrate (for example, substrate of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer may further optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives, such as a thickener (for example, sodium carboxymethyl cellulose (CMC-Na)).

In some embodiments, the negative electrode plate may be prepared in the following manner: the components used for preparing the negative electrode plate, for example, the negative electrode active material, the conductive agent, the binder, and any other component, are dissolved in a solvent (for example, deionized water) to form a negative electrode slurry. The negative electrode slurry is applied onto the negative electrode current collector, followed by processes such as drying and cold pressing, to obtain a negative electrode plate.

In some embodiments of this application, the electrolyte acts as a conductor of ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, a liquid electrolyte is used as the electrolyte. The liquid electrolyte includes an electrolytic salt and a solvent.

In some embodiments, the electrolyte salt may be selected from one or more of NaPF₆, NaClO₄, NaBF₄, KPF₆, KClO₄, KBF₄, LiPF₆, LiClO₄, LiBF₄, Zn(PF₆)₂, Zn(ClO₄)₂, and Zn(BF₄)₂.

In some embodiments, the electrolyte salt may be selected from one or more of NaPF₆, NaClO₄, and NaBF₄.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, cyclobutane sulfone, dimethyl sulfone, methyl ethyl sulfone, and diethyl sulfone.

In some embodiments, the electrolyte may further optionally include an additive. For example, the additive may include a negative electrode film forming additive and a positive electrode film forming additive, or may include an additive for improving specific properties of the battery, such as an additive for improving overcharge performance of the battery or an additive for improving high or low temperature performance of the battery.

In some embodiments of this application, no particular limitation is imposed on the type of the separator, and any known separator of a porous structure that has good chemical stability and mechanical stability in the art can be used.

In some embodiments, the separator may be made of at least one of glass fiber, nonwoven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, a positive electrode plate, a negative electrode plate, and a separator may be made into an electrode assembly through winding or lamination.

In some embodiments, the secondary battery may include an outer package. The outer package may be used to encapsulate the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 illustrates a secondary battery 5 of a square structure as an example.

In some embodiments, referring to FIG. 3, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be secured by fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 5 and FIG. 6 show a battery pack 1 as an example. Referring to FIG. 5 and FIG. 6, a battery box and a plurality of battery modules 4 provided in the battery box may be included in the battery pack 1. The battery box includes an upper box body 2 and a lower box body 3, the upper box body 2 capable of covering the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Examples 1 to 8

### Preparation of positive electrode conductive slurry

The aqueous adhesive, the conductive agent, and the thickener were mixed. Then, the curing agent was added to the solid mixture according to a weight ratio in Table 1. Finally, water nine times the mass of the solid mixture was added to prepare and obtain a positive electrode conductive slurry with a solid content of 10%.

Specifically, conductive graphite (purchased from Shanghai King Chemical Co., Ltd., SP5000) was used as the conductive agent; xanthan gum (with a molecular weight of about 1000000g/mol, purchased from Shanghai Aladdin Biochemical Technology Co. LTD) was used as the thickener; polyacrylic acid with a number average molecular weight of 300,000-800,000 was used as the aqueous binder; and polycarbodiimide of a number average molecular weight of 10,000-40,000 was used as the curing agent.

Examples 2-7 were the same as Example 1, except that a ratio of binder to curing agent in the formulation is different from that of Example 1. Epoxy silane was used as the curing agent in Example 8, and other materials were the same as those Example 1.

### Comparative Examples 1 to 5

Types and proportions of raw materials added in Comparative Examples 1 to 5 were different, and the preparation method was the same as that in Comparative Example 1.

Related parameters of the conductive slurry in Examples 1 to 8 and Comparative Examples 1 to 5 are shown in Table 1 and Table 2 below.

**Table 1: Raw material ratio of binder to curing agent in conductive slurry in Examples 1 to 8**

| | Slurry solvent | Binder | | Curing agent | | |
|---|---|---|---|---|---|---|
| No. | Aqueous solvent | Type | Parts by mass | Type | Parts by mass | R1 |
| Example 1 | Water | Polyacrylic acid | 46.0% | Polycarbodiimide | 4.0% | 0.09 |
| Example 2 | Water | Polyacrylic acid | 48.0% | Polycarbodiimide | 2.0% | 0.04 |
| Example 3 | Water | Polyacrylic acid | 47.0% | Polycarbodiimide | 3.0% | 0.06 |
| Example 4 | Water | Polyacrylic acid | 45.0% | Polycarbodiimide | 5.0% | 0.11 |
| Example 5 | Water | Polyacrylic acid | 44.0% | Polycarbodiimide | 6.0% | 0.14 |
| Example 6 | Water | Polyacrylic acid | 43.0% | Polycarbodiimide | 7.0% | 0.16 |
| Example 7 | Water | Polyacrylic acid | 48.6% | Polycarbodiimide | 1.4% | 0.03 |
| Example 8 | Water | Polyacrylic acid | 48% | Epoxy silane | 2.0% | 0.04 |

**Table 2: Raw material ratio of binder to curing agent in conductive slurry in Comparative Examples 1 to 5**

| | Solvent | Binder | | Curing agent | | |
|---|---|---|---|---|---|---|
| No. | | Type | Parts by mass | Type | Parts by mass | R1 |
| Comparative Example 1 | Water | Polyacrylic acid | 46% | / | 0.0 | / |
| Comparative Example 2 | Water | Styrene-butadiene rubber | 48% | / | 0.0 | / |
| Comparative Example 3 | Water | PVDF | 48% | / | 0.0 | / |
| Comparative Example 4 | NMP | Styrene-butadiene rubber | 48% | / | 0.0 | / |
| Comparative Example 5 | NMP | PVDF | 48% | / | 0.0 | / |

The parts by mass in Table 1 and Table 2 refer to the mass content of corresponding raw materials in solid components of the conductive slurry.

In addition, the conductive slurries obtained in Examples 1 to 8 and Comparative Examples 1 to 5 were separately manufactured into a secondary batteries, for performance tests of the foregoing secondary batteries. The test results are shown in Table 3 and Table 4 below.

### (1) Preparation of secondary battery

### 1. Preparation of positive electrode current collector

1.1 The foregoing positive electrode conductive slurry was uniformly applied on one surface of an aluminum foil, followed by drying, to obtain a positive electrode current collector.
1.2 Preparation of positive electrode plate

The positive electrode active material lithium iron phosphate, the conductive agent conductive carbon black, the compound dispersion stabilizer, and the aqueous binder were mixed at a weight ratio of 96:1:1.2:1.8, with the compound dispersion stabilizer using a compound mixture of xanthan gum (with a molecular weight of about 1000000g/mol, purchased from Shanghai Aladdin Biochemical Technology Co. Ltd.) and polyethyleneimine (with a molecular weight of about 1200g/mol, purchased from Shanghai Aladdin Biochemical Technology Co. Ltd.) at a compound weight ratio of 1:1 and the aqueous binder using an acrylonitrile-acrylic acid copolymer (LA133, purchased from Sichuan Indigo Materials Science and Technology Group Co., Ltd). The resulting mixture was mixed uniformly in a solvent deionized water, to obtain a positive electrode active slurry with a solid content of 50%. After that, the positive electrode slurry was uniformly applied onto a conductive film layer of the positive electrode current collector obtained in the foregoing steps to obtain the positive electrode active material film layer under conditions of the drying process. Then cold pressing and cutting were performed to obtain a positive electrode plate.

### 2. Preparation of negative electrode plate

The active material artificial graphite, the conductive agent carbon black, the binder styrene-butadiene rubber (SBR), and the thickener sodium carboxymethyl cellulose (CMC) were uniformly mixed at a weight ratio of 96.2:0.8:0.8: 1.2 in deionized water to obtain a negative electrode slurry, and then the negative electrode slurry was applied one or more times onto a negative electrode current collector copper foil, followed by drying, cold pressing, and cutting, to obtain a negative electrode plate.

### 3. Preparation of electrolyte

In an argon atmosphere glove box (H₂O<0.1ppm, O²<0.1ppm), the organic solvent ethylene carbonate (EC)/ethyl methyl carbonate (EMC) was mixed uniformly at a volume ratio of 3/7, and 12.5% of LiPF₆ lithium salt was added and dissolved to the organic solvent. The resulting mixture was stirred uniformly to obtain an electrolyte.

### 4. Separator

A PE (polyethylene) porous film was selected and a 2µm-thick ceramic coating was applied onto a surface of the film to serve as the separator.

### (2) Performance tests for secondary battery

### 1. Interface contact angle

Contact angle (contact angle) is an included angle between a solid-liquid interface and a gas-liquid interface at boundary of the solid, liquid and gas phases, passing through the interior of the liquid.

The interface contact angle in this application is an interface contact angle between water and the conductive slurry on a surface of the solid material or the dried conductive coating, and is an important parameter for measuring wetting performance of the liquid on the surface of the solid and capable of indirectly indicating adhesion performance between the liquid and the solid. Information about interaction of solid-liquid and solid-gas interfaces on a surface of the material may be obtained through measurement of the contact angle. If the contact angle θ<90°, the solid surface is hydrophilic, that is, the liquid is easier to wet the solid, a smaller angle indicating better wettability; if θ>90°, the solid surface is hydrophobic, that is, the liquid is not easy to wet the solid and is easy to move on the surface.

In the examples of this application, with Haston SDC-100, the dropping angle measurement method was used for testing the interface contact angle.

### 2. Peeling force

The peeling force test for the conductive coating was performed using a pulling machine, where the pulling machine was connected to both sides of the positive electrode plate to perform pulling, and a maximum value for peeling off the positive electrode material from the current collector was recorded. Measurement for each group was conducted five times, and the average value was then calculated after recording.

### 3. Resistance

After the positive electrode active material was applied onto the current collector and dried, the CRM-01 film resistance tester was used to test film resistance of the positive electrode plate. An average value was calculated after testing for each group was conducted five times.

### 4. Battery capacity retention rate

At 25°C, corresponding batteries in the examples and comparative examples were charged to 3.65V at a constant current rate of 1/3C, charged at a constant voltage of 3.65V to a current of 0.05C, left standing for 5min, and then discharged to 2.7V at 1/3C, and a resulting capacity was recorded as an initial capacity C0. The above steps were repeated for the same battery, and a discharge capacity Cn after the n-th cycle was also recorded. The battery capacity retention rate Pn after each cycle is equal to Cn/C0* 100%. During this test, the first cycle corresponds to n=1, the second cycle corresponds to n=2, ..., and the 100th cycle corresponds to n=100.

### 5. Water resistance time

A 5cm*5cm conductive aluminum foil with a 2um±0.3um-thick conductive coating was completely soaked in water. A time of dissolving the coating to reveal the aluminum foil was calculated, where the above time was the water resistance time.

### 6. The number of cracks after cold pressing

Cold pressing was performed on the positive electrode plate at a temperature of 20°C to 30°C with a cold pressing pressure of 10 tons using a cold pressing instrument at a cold pressing speed of 5m/min. After cold pressing for 24 hours, the surface of the electrode plate was observed with a scanning electron microscope, and the number of cracks on the surface of the conductive coating within an area of 0.1m² was calculated.

Data of the battery capacity retention rate corresponding to Example 1 in Table 1 is data obtained through measurement after 800 cycles under the above test conditions, that is, values for P800. The test procedure for Comparative Example 1 and other examples is the same as above. The lithium-ion battery products of Comparative Example 1 and Examples 2 to 8 were also tested based on the above steps.

**Table 3 Performance test results for secondary batteries prepared using conductive slurries in Examples 1 to 8**

| Parameters | Interface contact angle | | Peeling force | Water resistance time | Cracks | Resistance | Battery capacity retention rate |
|---|---|---|---|---|---|---|---|
| | Conductive slurry and aluminum foil | Conductive coating and water | NIM | Seconds | Pieces | Ω | |
| Example 1 | 67 | 66 | 70 | 370 | 0 | 0.32 | 98.1 |
| Example 2 | 68 | 65 | 80 | 210 | 0 | 0.35 | 97.8 |
| Example 3 | 69 | 66 | 74 | 280 | 0 | 0.31 | 97.5 |
| Example 4 | 66 | 66 | 65 | 410 | 0 | 0.33 | 98.2 |
| Example 5 | 66 | 67 | 58 | 440 | 0 | 0.38 | 97.1 |
| Example 6 | 65 | 68 | 50 | 450 | 0 | 0.42 | 94.7 |
| Example 7 | 69 | 66 | 83 | 180 | 1 | 0.68 | 95.4 |
| Example 8 | 65 | 68 | 85 | 205 | 0 | 0 | 97.9 |

**Table 4 Performance test results for secondary batteries prepared using conductive slurries in Comparative Examples 1 to 5**

| Parameters | Interface contact angle | | Peeling force | Water resistance time | Cracks | Resistance | Battery capacity retention rate | |
|---|---|---|---|---|---|---|---|---|
| | Conductive slurry and aluminum foil | Conductive coating and water | NIM | Seconds | Pieces | Ω | | |
| Comparative Example 1 | 69 | 65 | 101 | 10 | 87 | 1.39 | 81.3 | |
| Comparative Example 2 | 93 | The conductive slurry does not impregnate the aluminum foil and cannot be applied onto the aluminum foil. | | | | | | |
| Comparative Example 3 | 92 | The conductive slurry does not impregnate the aluminum foil and cannot be applied onto the aluminum foil. | | | | | | |

| Parameters | Interface contact angle | | | Peeling force | Water resistance time | Cracks | Resistance | Battery capacity retention rate |
|---|---|---|---|---|---|---|---|---|
| | Conductive slurry and aluminum foil | Conductive coating and water | | NIM | Seconds | Pieces | Ω | |
| Comparative Example 4 | 65 | 92 | The conductive coating does not impregnate the aqueous positive electrode and the positive electrode material cannot be applied. | | | | | |
| Comparative Example 5 | 68 | 88 | The conductive coating does not impregnate the aqueous positive electrode and the positive electrode material cannot be applied. | | | | | |

Based on the above results, it can be seen that in Example 1 to Example 8, desirable results are achieved in terms of wettability, adhesion performance, water resistance, crack resistance, conductivity, and battery capacity retention performance of the conductive coating.

First, the interface contact angles between the conductive slurry and the aluminum foil are all less than 80°, mostly between 60° and 70°. After the conductive slurry is applied onto the surface of the aluminum foil, the wettability is relatively good and the conductive slurry can be well spread on the surface of the aluminum foil. In addition, the interface contact angles between the conductive coating and the water are all less than 80°, mostly between 60° and 70°. Relatively good wettability is present between the conductive coating and the aqueous positive electrode active material, and the positive electrode active material can be well spread on the conductive coating.

Because the aqueous binder is used in the examples of this application, relatively good wettability can be formed with the aluminum foil and the aqueous positive electrode material, which effectively improves efficiency of the conductive coating and also improves the adhesion strength and stability between the positive electrode active material and the conductive coating.

Further, the peeling force of the electrode plate is greater than 50N/M. A large peeling force means that the conductive coating can firmly attach the positive electrode active material to the aluminum foil, and the positive electrode active material can maintain a good connection with the aluminum foil after a number of cycles, which is not easy to delaminate and can ensure the capacity of the battery.

In the examples of this application, the mass ratio R1 of the curing agent added to the binder as well as the aqueous binder used is within a range of 0.03 to 0.16. This is because the amount of curing agent added is controlled within an appropriate range, the curing agent undergoes cross-linking reaction with the binder to obtain a proper cross-linking degree, and the resulting three-dimensional cross-linked network structure makes the conductive coating obtained from the conductive slurry have good water resistance performance. In addition, the binder molecules maintain good adhesion performance at an appropriate degree of cross-linking. Therefore, the foregoing mass range selected for proportioning is the best range for ensuring the adhesion performance and water resistance performance.

Further, the water resistance time of the electrode plates each exceeds 180 seconds, the conductive coating during the water resistance period is not dissolved, and the conductive coating does not fall off when being wiped with dust-free paper. As shown in FIG. 8, the positive electrode material layer 6 is well attached to the aluminum foil 7 in Example 1, with no gaps in between. The above results show that the electrode plates in this application has good water resistance. Specifically, the conductive coating being formed may not be dissolved easily in water, and when coming in contact with the water in the positive electrode active material, the conductive coating can still maintain good physicochemical properties without dissolving and features strong adhesion performance.

In the examples of this application, due to use of the curing agent for cross-linking reaction with the aqueous binder to generate a three-dimensional network structure, the water resistance performance of the conductive coating can be ensured. Therefore, the active material in the positive electrode plate can be firmly attached to the aluminum foil to ensure the capacity and cycling performance of the secondary battery.

Further, the number of cracks upon cold pressing is all less than or equal to 1. This means that during the cold pressing of the positive electrode plate, the surface of the current collector and the conductive coating are attached tightly without gaps. Therefore, when being pressed together, the positive electrode coating and the conductive coating are subject to slight deformation by force and have small relative displacement, and the positive electrode coating may not crack. Otherwise, the conductive coating is dissolved or incompatible with the surface of the current collector, with small adhesion force between the two or with gaps, and large deformation is generated during pressing together by force, resulting in deformation and cracking of the coating.

Further, the resistance in all Examples 1 to 8 is less than 0.7Ω.

In the examples of this application, an appropriate amount of conductive agent is added to the conductive coating. Therefore, good conductivity can be ensured and good electrical energy conduction is implemented between the positive electrode active material and the aluminum foil.

Further, in Examples 1 to 8 of this application, an unexpected technical effect is also obtained, that is, the battery capacity retention rate of the secondary battery is further improved.

The applicants analyze that due to the good adhesion performance of the conductive coating to the active material and the aluminum foil in Examples 1 to 8 of this application, the active material and the aluminum foil can be better attached to each other. This avoids detachment of the active material from the aluminum foil or poor adhesion to result in a reduced contact area between the coatings, difficult electronic transportation, increased resistance of the electrode plate, or electrical performance abnormalities and capacity decay caused by local insulation or detachment of effective materials due to coating detachment. Therefore, the above technical solution ensures the capacity and safety of the battery and improves the battery capacity retention rate. Certainly, this is not limited to beneficial effects resulting from the foregoing reasons, and any technical effect that can be achieved in the examples of this application is obtained through the technical means of this application and should fall within the protection scope of this application.

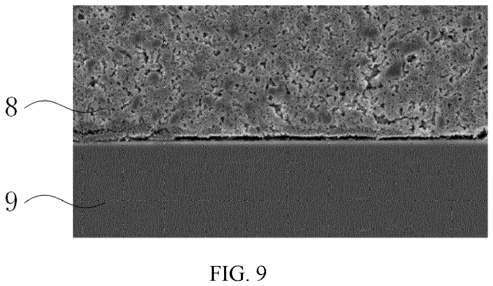

Compared with the foregoing examples, no curing agent is added to the raw material of the conductive slurry in Comparative Example 1. As shown in FIG. 9, a side section of the positive electrode plate in Comparative Example 1 is shown under an electron microscope. A distinct gap is formed between the positive electrode material layer 8 and the aluminum foil 9 in Comparative Example 1. This is because no curing agent is added to the binder, the binder is dissolved when coming in contact with the aqueous positive electrode active material after being dried. The experiment shows that its water resistance time is only 10 seconds, and after 10 seconds, a gap is created. It can be seen that in the aqueous binder, if no curing agent is added, the water resistance effects in Examples 1 to 8 of this application cannot be achieved.

In Comparative Example 2, the binder used was styrene-butadiene rubber. Good infiltration cannot be implemented between the aluminum foil and the styrene-butadiene rubber, and the conductive slurry in Comparative Example 2 cannot be properly applied onto the aluminum foil. Therefore, in the foregoing example, the positive electrode active material and the aluminum foil cannot be effectively attached.

In Comparative Example 3, polyvinylidene fluoride is used as the binder, and good infiltration cannot be implemented between the aluminum foil and polyvinylidene fluoride. The conductive slurry in Comparative Example 3 cannot be applied onto the aluminum foil. Therefore, in the foregoing example, the positive electrode active material and the aluminum foil cannot be effectively attached.

In Comparative Example 4, the oil-based solvent N-Methylpyrrolidone is used. Good infiltration cannot be implemented between the foregoing material and the aqueous positive electrode active material, and the positive electrode active material cannot be applied onto the conductive coating. Therefore, in the foregoing example, the positive electrode active material and the aluminum foil cannot be effectively attached.

In Comparative Example 5, the oil-based solvent N-Methylpyrrolidone is used. Good infiltration cannot be implemented between the foregoing material and the aqueous positive electrode active material, and the positive electrode active material cannot be applied onto the conductive coating. Therefore, in the foregoing example, the positive electrode active material and the aluminum foil cannot be effectively attached.

To sum up, in Comparative Examples 1 to 5, the adhesion performance and water resistance of the conductive coating cannot be effectively improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A conductive slurry, **characterized by** comprising the following raw material components:
an aqueous binder comprising an aqueous polymer having polycarboxyl functionality;
a conductive agent;
a dispersant; and
a curing agent for cross-linking reaction with the aqueous polymer having polycarboxyl functionality.

2. The conductive slurry according to claim 1, **characterized in that** the conductive slurry comprises, in parts by mass:
100 parts of aqueous binder;
50-150 parts of conductive agent;
800-850 parts of dispersant; and
3-16 parts of curing agent.

3. The conductive slurry according to claim 1 or 2, **characterized in that** the aqueous polymer having polycarboxyl functionality comprises at least one of aqueous acrylic resin, an ethylene vinyl acetate copolymer, and an acrylonitrile multi-copolymer having polycarboxyl functionality.

4. The conductive slurry according to claim 1 or 2, **characterized in that** the aqueous acrylic resin comprises a copolymer of polyacrylic acid, acrylic acid, acrylate and optionally other ethylenically unsaturated monomers, or a combination thereof; optionally, the aqueous acrylic resin comprises polyacrylic acid having a number average molecular weight of 300,000 to 800,000; and optionally, the acrylic acid is partially neutralized to form salt.

5. The conductive slurry according to any one of claims 1 to 4, **characterized in that** the curing agent comprises a compound having more than two carboxylic acid reactive functional groups, optionally, the carboxylic acid reactive functional group being selected from at least one of aziridine, ethylene oxide, amino, and carbodiimide group; and
optionally, the curing agent comprises at least one of aziridine functional compound, polycarbodiimide and salt thereof, epoxy-functionalized silane compound, polymer grafted with epoxy silane, and polyethyleneimine; and optionally, the polycarbodiimide has a number average molecular weight of 10,000 to 40,000.

6. The conductive slurry according to claim 2, **characterized in that** the dispersant comprises an aqueous solvent, and optionally, the aqueous solvent comprises water.

7. The conductive slurry according to any one of claims 1 to 4, **characterized in that** the raw material components of the conductive slurry further comprise a thickener, the thickener comprising at least one of xanthan gum, carboxymethyl cellulose and salt thereof, or poly-N-vinylacetamide.

8. The conductive slurry according to any one of claims 1 to 4, **characterized in that** the conductive agent comprises at least one of carbon black, graphite, acetylene black, Ketjen black, graphene, and carbon nanotubes.

9. A method for preparing the conductive slurry according to any one of claims 1 to 8, **characterized in that** the method comprises:
uniformly mixing a conductive agent, a dispersant, and an aqueous binder to obtain a pre-mixture; and
adding a curing agent to the pre-mixture and uniformly mixing it to obtain a conductive slurry.

10. The method according to claim 9, **characterized in that** a mass ratio of the curing agent to the aqueous binder is 0.03-0.16.

11. A current collector, **characterized by** comprising a substrate and a conductive coating applied on the substrate, wherein the conductive coating comprises a conductive agent and an aqueous polymer binder having polycarboxyl functionality, wherein the aqueous polymer is cross-linked to form a three-dimensional network structure.

12. The current collector according to claim 11, **characterized in that** the conductive coating is formed by curing the conductive slurry according to any one of claims 1 to 8.

13. The current collector according to claim 11 or 12, **characterized in that** the substrate comprises an aluminum foil or a polymeric material composite containing aluminum.

14. The current collector according to claim 11 or 12, **characterized in that** a peeling force between the conductive coating and the substrate is N≥50N/M.

15. An electrode plate, **characterized by** comprising:
the current collector according to any one of claims 11 to 14; and
an active material layer provided on a conductive coating of the current collector.

16. The electrode plate according to claim 15, **characterized in that** the active material layer comprises an olivine-structured lithium-containing phosphate and an aqueous polymer binder.

17. A secondary battery, **characterized by** comprising the positive electrode plate according to claim 15 or 16.

18. A battery module, **characterized by** comprising the secondary battery according to claim 17.

19. A battery pack, **characterized by** comprising the battery module according to claim 18.

20. An electric apparatus, **characterized by** comprising at least one of the secondary battery according to claim 17, the battery module according to claim 18, or the battery pack according to claim 19.
